# DEMANDE DE BREVET EUROPEEN

(11) **EP 4 243 461 A1**
(43) Date de publication de la demande: **13.09.2023**
(21) Numéro de dépôt: 23160681.5
(22) Date de dépôt: 08.03.2023
(51) Int. Cl.: H04W 4/10, H04W 12/041, H04W 12/0431, H04W 12/76, H04W 12/61, H04W 4/90, H04W 76/50, H04L 65/4061, H04L 65/4038

(54) **PROCÉDÉ DE GESTION DE CHIFFREMENT PAR UNE ENTITÉ ÉMETTRICE DANS UN RÉSEAU 3GPP MCS**

(30) Priorité: 08.03.2022 FR 2201993
(71) Demandeur: Airbus DS SLC, 78990 Elancourt (FR)
(72) Inventeur: Granboulan, Louis, Elancourt (FR); Paterour, Olivier, Elancourt (FR); Piroard, François, Elancourt (FR)
(74) Mandataire: Cabinet Camus Lebkiri

(57) **Abrégé**

Un aspect de l'invention concerne un procédé mis en oeuvre par une entité cliente émettrice comprise dans un réseau selon le standard 3GPP MCS, l'entité cliente émettrice étant configurée pour émettre un contenu destiné à une entité cliente réceptrice comprise dans le réseau et étant affiliées à un même groupe de communication, le procédé comprenant au moins une étape de sélection d'un contexte de sécurité parmi:
- Un contexte de sécurité avec diversité d'extrémité formé de :
- Un identifiant de clé maître long formé du GMK-ID et du DMK-ID, ou
- Un identifiant de clé maitre court formé du GMK-ID ou
- Un identifiant de clé maitre court formé du GUK-ID ou
- Aucun identifiant de clé maitre.

- Un contexte de sécurité sans diversité d'extrémité formé de :
- Un identifiant de clé maitre court formé du GMK-ID ou
- Aucun identifiant de clé maitre.

## Description

### DOMAINE TECHNIQUE DE L'INVENTION

Le domaine technique de l'invention est celui des télécommunications.

La présente invention concerne un procédé de gestion de chiffrement par une entité émettrice dans un réseau 3GPP MCS, et en particulier permettant de gérer des cas non prévus par le standard.

### ARRIERE-PLAN TECHNOLOGIQUE DE L'INVENTION

Les normes de radiocommunication PMR (selon la dénomination anglo-saxonne « Professional Mobile Radio » pour « Radio Mobile Professionnelle ») TETRAPOL^{®}, TETRA^{®} ou encore P25^{®} permettent la mise en oeuvre de réseaux professionnels sécurisés. Ces réseaux à bande étroite sont des réseaux nationaux ou locaux : ils sont implémentés par exemple au sein d'une organisation telle qu'une entreprise, au sein d'un pays par exemple pour les communications des pompiers, des forces de l'ordre, des militaires etc.

Ces réseaux évoluent vers une prise en charge d'échanges en large bande. Le standard 3GPP régissant les réseaux mobiles de type « GSM » selon la dénomination anglo-saxonne « Global System for Mobile Communications » et plus particulièrement dans les déploiements faisant appel à des services de communications critiques définis par le 3GPP appelés « MCS » selon la dénomination anglo-saxonne « Mission Critical Services » permet ces échanges sécurisés en large bande.

Le chiffrement de média voix MCPTT (de l'anglais « Mission Critical Push To Talk » pour « Appuyer Pour Parler en Mission Critique » en français) ou vidéo MCVideo dans une communication de groupe est défini dans la spécification technique TS 33.180. Elle met notamment en oeuvre la diversité du point d'extrémité (« endpoint diversity » en anglais).

On appellera par la suite « MCX » tout service Mission-Critique défini par le standard 3GPP MCS, tels que les services MCVideo, MCData (pour « Données » en français) et MCPTT. Un « client » et un serveur sont des dispositifs comprenant au moins un processeur et une mémoire, la mémoire comprenant des instructions qui, lorsqu'elles sont exécutées par le processeur, conduisent le dispositif utilisateur à mettre en oeuvre au moins les actions qui lui sont attribuées. Préférentiellement, un client est un dispositif utilisateur. De la même façon, un « serveur » peut être un dispositif utilisateur. Un « client MCX » et un « serveur MCX » sont donc des dispositifs utilisateur configurés pour mettre en oeuvre des services Mission Critique.

Lors d'une émission de media depuis un client MCX, le media émis peut être chiffré d'une façon ne dépendant pas de l'émetteur. Dans un tel cas, le concept de « diversité d'extrémité » ou « endpoint diversity » en anglais, n'est pas mise en oeuvre. Au contraire, la mise en oeuvre de la diversité d'extrémité impose le chiffrement du media émis par une clé propre au client MCX émetteur. Pour cela, l'identité MCX ID de l'utilisateur de ce client MCX émetteur est utilisée pour générer un identifiant de clé utilisateur de groupe (GUK-ID pour « Group User Key Identifier » en anglais). Cet identifiant GUK-ID est utilisé pour :
- chiffrer un media du flux SRTP (de l'anglais « Secure Real-time Protocol » pour « Protocole Temps Réel Sécurisé » en français) émis par le client MCX émetteur et
- déchiffrer ce flux media SRTP par les clients MCX récepteurs.

Les procédures de la spécification technique TS 33.180 (clause 7.4.2) prévoient que le client MCX émetteur inclue cet identifiant GUK-ID dans un champ SRTP MKI (de l'anglais « Master Key Identifier » pour « Identifiant de Clé Maitre » en français) de 64 bits transmis avec chaque paquet SRTP. L'identifiant de clé maitre MKI au format long (64 bits) comprend en fait un identifiant de clé maitre de groupe (GMK-ID pour « Group Master Key Identifier » en anglais) concaténé à l'identifiant de clé utilisateur de groupe GUK-ID. Pour créer l'association de sécurité du groupe de communication au sein duquel le media est échangé, une clé maitre de groupe (GMK) et son identifiant associé (GMK-ID) sont distribués aux clients MCX du groupe par un serveur de gestion de groupe (« GMS » pour « Group Management Server » en anglais).

Cette procédure donne aussi la possibilité, lorsque l'identité de l'utilisateur du client MCX émetteur (identité aussi appelée « User Salt » en anglais) est connue des clients MCX récepteurs, de réduire le SRTP MKI à 32 bits en omettant sa composante GUK-ID de l'émetteur, c'est-à-dire en ne comprenant que l'identifiant de clé maitre de groupe GMK-ID. L'identifiant de clé utilisateur de groupe GUK-ID est alors calculé localement par les clients MCX récepteurs en réalisant une opération « OU exclusif » XOR entre l'identité de l'utilisateur du client MCX émetteur connue (« User salt ») et l'identifiant de clé maitre de groupe GMK-ID. De la même façon, l'identifiant de clé maitre de groupe GMK-ID peut être calculé à partir de l'identifiant de clé utilisateur de groupe GUK-ID et de l'identité de l'utilisateur du client MCX émetteur connue (« User salt »). Par contre, l'identité de l'utilisateur du client MCX émetteur ne peut être obtenue à partir de l'identifiant de clé maitre de groupe GMK-ID et de l'identifiant de clé utilisateur de groupe GUK-ID, ce pour garder une certaine confidentialité.

L'identité de l'utilisateur du client MCX émetteur peut être obtenue car elle est comprise dans les messages de contrôle de prise de parole en service voix MCPTT, messages appelés « Floor Control ». En service vidéo MCVideo, cette information est obtenue car elle est comprise dans les messages de contrôle de transmission, messages appelés « transmission control ». En service données MCData, il n'existe pas de diversité des points d'extrémité dans les spécifications 3GPP. En MCData, il est toutefois possible de récupérer l'identité de l'utilisateur du client MCX émetteur dans la charge utile (« payload » en anglais) des messages SIP et/ou HTTP. SIP est un protocole d'initiation de session (« Session Initiation Protocol » en anglais) connu et HTTP (pour « HyperText Transfer Protocol » en anglais) est un protocole de communication connu. En MCData, ce « payload » est chiffré de bout en bout mais sans diversité d'extrémité.

Dans le standard 3GPP MCS, seul le client MCX émetteur détermine quel format d'identifiant MKI (32bits ou 64 bits) il utilise. Son identité d'utilisateur est transmise dans toutes les demandes d'établissement d'appel (« call request » en anglais) et dans toutes les demandes de droit de parole (« floor request » et « transmission control »).

Le client MCX émetteur peut donc légitimement considérer que son identité d'utilisateur est transmise de bout en bout et choisir d'économiser de la bande passante (de 5 à 10% pour de la voix MCPTT selon la compression d'entête utilisée) en utilisant le format de MKI réduit (32 bits) n'incluant pas son identifiant GUK-ID, considérant alors que les client MCX récepteurs seront capables de le recalculer localement en utilisant son identité d'utilisateur récupérées à partir des floor control, transmission control ou messages SIP en MCData.

Or, il existe des cas où l'identité de l'utilisateur du client MCX émetteur ne pourra pas être connue de tous ou de certains client MCX récepteurs, les empêchant de pouvoir déchiffrer les informations reçues, sans que le client MCX émetteur ne le sache :
- Parce que conformément aux procédures des spécifications techniques TS 24.380 (« media plane » MCPTT) et 24.581 (« media plane » MCVideo), le serveur contrôleur de media du groupe au sein duquel les utilisateurs communiquent considère qu'il y a un besoin d'intimité (« privacy » en anglais) et que l'identité de l'utilisateur à qui le droit d'émettre est accordé ne doit pas être indiquée aux autres participants, ou
- Parce que conformément aux procédures des spécifications techniques TS 24.380 et 24.581 pour les groupes regroupés, l'identité de l'utilisateur demandant le droit d'émettre est masqué au serveur contrôleur de media du regroupement de groupe par le serveur contrôleur de media du groupe constituant (appelé « Non-controlling server »), le groupe constituant étant le groupe de communication appartenant au groupe regroupe et auquel est affilié le dispositif utilisateur de l'utilisateur demandant le droit d'émettre,
- Parce que dans le cas d'interconnexion de systèmes, l'identité des utilisateurs d'un des systèmes peut être considérée comme sensible et masquée par un serveur passerelle MCX (« MCX gateway server ») en charge de filtrer de telles informations sensibles dans les messages échangés entre les systèmes ne se faisant pas entièrement confiance. Dans un tel contexte, la portée du groupe de communication (intra ou inter système) n'est pas nécessairement connue des membres du groupe.

Conformément à la spécification technique 3GPP TS 33.180, il existe un besoin de chiffrer les media dans le groupe de communication utilisant de la diversité d'extrémité (« endpoint diversity » en anglais). Ceci n'est valable que pour le media voix (MCPTT) et pour le media video (MCVideo) mais pas pour les « payload » MCData, car il n'existe pas de endpoint diversity dans les spécifications 3GPP MCS du MCData.

Comme décrit précédemment, l'identité de l'utilisateur du client MCX émetteur ne pouvant pas toujours être connue des autres participants, par exemple pour des raisons de confidentialité (privacy), dans des cas d'interconnexion de systèmes dans des domaines de confiance différents, ou dans des cas de regroupement de groupes , il existe donc actuellement des cas dans lesquels les clients MCX récepteurs ne peuvent déchiffrer le media reçu, qu'il soit un media voix (MCPTT), un media vidéo (MCVideo). Le besoin de confidentialité du client MCX émetteur peut être déterminé à tout niveau, par exemple par appel, par utilisateur, par groupe, par organisation, par système ou par pays, ce qui complique la tâche d'identification, dans un réseau, des acteurs et/ou des actions pouvant être amené(e)s à cacher l'identité de l'utilisateur du client MCX émetteur.

Il existe donc un besoin de pouvoir s'assurer, dans un réseau 3GPP MCS, qu'un client MCX récepteur puisse déchiffrer un contenu chiffré émis par un client MCX émetteur.

### RESUME DE L'INVENTION

L'invention offre une solution aux problèmes évoqués précédemment, en permettant à un client émetteur, dans un réseau 3GPP MCS, de choisir le chiffrement qu'il applique à un contenu émis de sorte qu'un client récepteur puisse bien déchiffrer le contenu émis.

Un aspect de l'invention concerne un procédé mis en oeuvre par une entité cliente émettrice comprise dans un réseau selon le standard 3GPP MCS « 3rd Generation Partnership Program Mission Critical Services », l'entité cliente émettrice étant configurée pour émettre un contenu destiné à une entité cliente réceptrice comprise dans le réseau, l'entité cliente émettrice et l'entité cliente réceptrice étant affiliées à un même groupe de communication, le procédé comprenant au moins une étape de sélection, par l'entité cliente émettrice à partir d'au moins une information de contexte de sécurité stocké en mémoire de l'entité émettrice, d'un contexte de sécurité parmi les contextes de sécurité suivants:
- Un contexte de sécurité avec diversité d'extrémité, le contexte de sécurité étant formé de :
   - Un identifiant de clé maître MKI long formé d'un identifiant de clé maitre de groupe GMK-ID et d'un identifiant de clé utilisateur de groupe GUK-ID, l'identifiant de clé maitre de groupe GMK-ID étant propre au groupe de communication, l'identifiant de clé utilisateur de groupe GUK-ID étant propre à un utilisateur de l'entité émettrice, ou

   - Un identifiant de clé maitre MKI court formé de l'identifiant de clé maitre de groupe GMK-ID ou
   - Un identifiant de clé maitre MKI court formé de l'identifiant de clé utilisateur de groupe GUK-ID ou
   - Aucun identifiant de clé maitre MKI.
- Un contexte de sécurité sans diversité d'extrémité, le contexte de sécurité étant formé de :
   - Un identifiant de clé maitre MKI court formé de l'identifiant de clé maitre de groupe GMK-ID ou
   - Aucun identifiant de clé maitre MKI.

Grâce à l'invention, on s'assure que l'entité réceptrice d'un contenu émis et chiffré par une entité émettrice est capable de déchiffrer le contenu. Pour cela, l'invention comprend une sélection d'un contexte de sécurité en fonction d'une information stockée en mémoire de l'entité émettrice. Ainsi, l'entité émettrice a connaissance de l'environnement dans lequel elle émet le contenu chiffré et le contexte de sécurité comprend les informations nécessaires pour que l'entité réceptrice puisse déchiffrer le contenu. Par ailleurs, le contexte de sécurité peut être utilisé pour adapter le chiffrement du contenu et permet une sélection dynamique de chiffrement au contraire de ce que prévoit le standard 3GPP MCS actuellement dans la spécification technique TS 33.180. L'invention permet à l'entité émettrice d'utiliser ou non la diversité d'extrémité, au contraire de ce que prévoit le standard 3GPP MCS actuellement dans la spécification technique TS 33.180, ce qui permet d'économiser de la bande passante en n'ayant pas à transmettre l'identifiant de clé utilisateur de groupe GUK-ID dans l'identifiant de clé maitre MKI.

Les inventeurs ont aussi remarqué que l'identifiant de clé maitre de groupe GMK-ID n'a parfois pas besoin d'être transmis, l'entité réceptrice pouvantdéterminer quel identifiant de clé maitre de groupe GMK-ID a été utilisé à partir des identifiants de clé maitre de groupe GMK-ID qu'elle stocke déjà, pour ce groupe de communication au sein duquel elle reçoit le contenu chiffré ou pour tous les groupes de communication auxquels elle est affiliée. Sans l'invention, il n'est pas possible de mettre en oeuvre ce type de cas, dans lesquels l'identifiant de clé maître MKI n'a pas besoin d'être émis avec le contenu chiffré, car il n'est pas prévu par le standard 3GPP MCS, et car il n'existe pas de mécanisme le permettant. La présence d'une information de contexte de sécurité en mémoire de l'entité émettrice permet de sélectionner un contexte de sécurité pour mettre en oeuvre ce type de cas.

Grâce à l'invention, la bande passante du réseau n'est pas inutilement utilisée, en n'envoyant que les informations nécessaires à l'entité réceptrice pour qu'elle puisse déchiffrer le contenu, et toutes les informations nécessaires sont envoyées pour que l'entité réceptrice puisse déchiffrer le contenu.

Dans les cas où l'identité de l'utilisateur de l'entité émettrice n'est pas connue de l'entité réceptrice, un contexte de sécurité avec un identifiant de clé maître MKI court comprenant l'identifiant de la clé utilisateur de groupe GUK-ID pourra être sélectionné, car l'entité réceptrice peut alors déterminer l'identifiant de clé maitre de groupe GMK-ID correct en testant les différents identifiants de clé maitre de groupe GMK-ID qu'elle stocke et donc déchiffrer le contenu grâce à la clé maitre composée de l'identifiant de clé utilisateur de groupe GUK-ID reçu et de l'identifiant de clé maitre de groupe GMK-ID déterminé, ce sans avoir à utiliser l'identité de l'utilisateur de l'entité émettrice.

Outre les caractéristiques qui viennent d'être évoquées dans les paragraphes précédents, le procédé selon un aspect de l'invention peut présenter une ou plusieurs caractéristiques complémentaires parmi les suivantes, considérées individuellement ou selon toutes les combinaisons techniquement possibles :
- le procédé comprend en outre les étapes de :
   - Chiffrement du contenu, le contenu étant chiffré par l'entité cliente émettrice, le chiffrement du contenu étant basé sur une clé maitre selon le protocole SRTP (Secure Real Time Protocol), la clé maitre étant obtenue :
      - Si le contexte de sécurité est avec diversité d'extrémité, à partir de l'identifiant de clé maitre de groupe (GMK-ID) et de l'identifiant de clé utilisateur de groupe (GUK-ID),

      - Si le contexte de sécurité est sans diversité d'extrémité, à partir de l'identifiant de clé maitre de groupe (GMK-ID),
   - Emission d'une trame à destination de l'entité réceptrice, selon le protocole SRTP, la trame comprenant le contenu chiffré et le contexte de sécurité.
- l'information stockée en mémoire de l'entité émettrice est un ensemble de paramètres comprenant les paramètres suivants :
   - Paramètre de diversité d'extrémité comprenant une information de mise en oeuvre de diversité d'extrémité ou non,
   - Paramètre de transmission de l'identifiant de clé maitre de groupe (GMK-ID) comprenant une information de transmission de l'identifiant de clé maitre de groupe (GMK-ID) ou non,
   - Paramètre de transmission de l'identifiant de clé utilisateur de groupe (GUK-ID) comprenant une information de transmission de l'identifiant de clé utilisateur de groupe (GUK-ID) ou non,
   et en ce que le contexte de sécurité est construit à partir de l'ensemble de paramètres.
   - le groupe de communication est un groupe MCPTT, MCVideo ou MCData .
   - l'information de contexte de sécurité est reçue d'une entité distante précédemment à l'étape de sélection de contexte de sécurité.
   - l'identifiant de clé maitre de groupe GMK-ID peut être obtenu à partir de l'identifiant de clé utilisateur de groupe GUK-ID et d'une identité de l'utilisateur de l'entité émettrice et l'identifiant de clé utilisateur de groupe GUK-ID peut être obtenu à partir de l'identifiant de clé maitre de groupe GMK-ID et d'une identité de l'utilisateur de l'entité émettrice.

Un autre aspect de l'invention concerne un réseau de communication selon le standard 3GPP MCS « 3rd Generation Partnership Program Mission-Critical System », le réseau de communication comprenant au moins :
- une entité cliente émettrice configurée pour mettre en oeuvre le procédé selon l'invention,
- une entité cliente réceptrice configurée pour recevoir le contenu chiffré et le contexte de sécurité émis par l'entité émettrice.

L'invention et ses différentes applications seront mieux comprises à la lecture de la description qui suit et à l'examen des figures qui l'accompagnent.

### BREVE DESCRIPTION DES FIGURES

Les figures sont présentées à titre indicatif et nullement limitatif de l'invention.
- La figure 1 montre une représentation schématique d'un réseau comprenant des entités configurées pour mettre en oeuvre le procédé selon l'invention,
- Les figures 2a à 2d montrent différentes une représentations schématiques de contextes de sécurité sélectionnables,
- La figure 3 montre une représentation schématique d'un procédé selon l'invention.
- La figure 4 montre une représentation schématique d'une entité émettrice configurée pour mettre en oeuvre le procédé selon l'invention.

### DESCRIPTION DETAILLEE

Sauf précision contraire, un même élément apparaissant sur des figures différentes présente une référence unique.

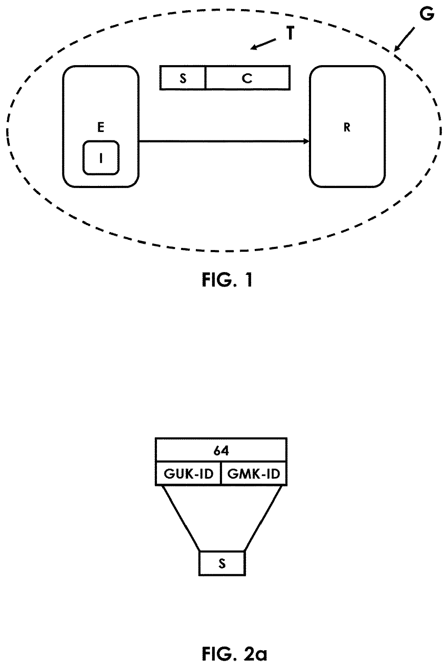

La Figure 1 montre une représentation schématique d'un réseau comprenant des entités configurées pour mettre en oeuvre le procédé selon l'invention.

En particulier, le réseau représenté à la Figure 1 comprend une entité émettrice E configurée pour mettre en oeuvre le procédé selon l'invention, et une entité réceptrice R.

Le réseau représenté à la Figure 1 est un réseau selon le standard 3GPP MCS, c'est-à-dire qu'il est implémenté en suivant les spécifications définies par le standard 3GPP MCS.

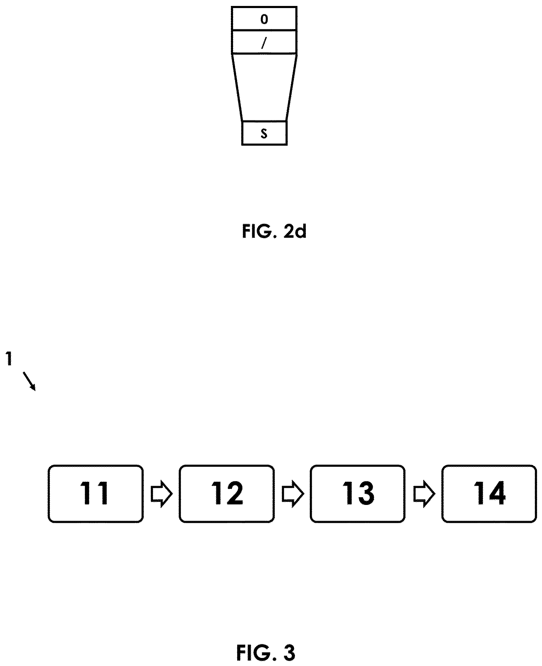

La Figure 3 montre une représentation schématique du procédé selon l'invention. Le procédé représenté à la Figure 3 est un procédé de gestion de chiffrement selon l'invention au sein du réseau de la Figure 1.

Le réseau de la Figure 1 comprend un groupe de communication G. L'entité émettrice E est affiliée au groupe de communication G. L'entité réceptrice R est aussi affiliée au même groupe de communication G. Le groupe G est un groupe de communication MCPTT, MCVideo ou MCData tels que définis dans l'état de l'art.

L'entité émettrice E et l'entité réceptrice R peuvent être des entités client ou serveur, participant ou non-participant, ou toute autre entité définie par le standard 3GPP MCS. L'entité émettrice E et l'entité réceptrice R sont des dispositifs comprenant au moins un processeur et une mémoire, la mémoire comprenant des instructions qui, lorsqu'elles sont exécutées par le processeur, conduisent le processeur à mettre en oeuvre une action attribuée à l'entité. Par exemple, les entités peuvent être des dispositifs utilisateur tels que des téléphones mobiles, des tablettes, des ordinateurs, ou tout autre dispositif utilisable par un utilisateur, ou peuvent encore être des ordinateurs ou dispositifs ayant le rôle de serveur au sens du standard 3GPP MCS.

Le procédé 1 selon l'invention représenté à la Figure 3 permet à l'entité émettrice E de sélectionner un contexte de sécurité S approprié au regard du réseau dans lequel elle évolue. Pour cela, l'entité émettrice E stocke au moins une information I de contexte de sécurité, sur la base de laquelle elle réalise une étape 12 de sélection de contexte de sécurité S, l'étape 12 de sélection étant comprise dans le procédé 1 selon l'invention représenté à la Figure 3.

L'information I de contexte de sécurité est stockée dans la mémoire (non représentée) de l'entité émettrice E. Cette information peut optionnellement avoir été reçue, à une étape 11 de réception comprise dans le procédé 1 selon l'invention représenté à la Figure 3. Cette étape 11 de réception peut comprendre la réception, via le réseau 3GPP MCS, de l'information I ayant été envoyée par une entité distance, par exemple par un serveur ou par une entité cliente contrôlée par un utilisateur, par exemple par un administrateur ayant connaissance du réseau 3GPP MCS. Cette information I a de préférence été créée par l'administrateur ayant connaissance du réseau 3GPP MCS et de ses spécificités, afin d'avoir par la suite une sélection de contexte de sécurité S à l'étape 12 du procédé 1 la plus appropriée possible par rapport à la topologie et au contexte du réseau.

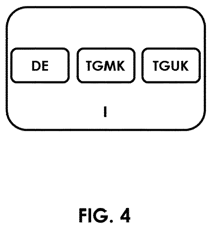

Dans un mode de réalisation préférentiel représenté schématiquement à la Figure 4, l'information I de contexte de sécurité comprend un ensemble de paramètres. Cet ensemble de paramètres comprend préférentiellement les trois paramètres suivants :
- Paramètre de diversité d'extrémité DE comprenant une information de mise en oeuvre de diversité d'extrémité ou non,
- Paramètre de transmission TGMK de l'identifiant de clé maitre de groupe GMK-ID comprenant une information de transmission de l'identifiant de clé maitre de groupe GMK-ID ou non,
- Paramètre de transmission TGUK de l'identifiant de clé utilisateur de groupe GUK-ID comprenant une information de transmission de l'identifiant de clé utilisateur de groupe GUK-ID ou non.

L'invention utilise les identifiants de clé suivants :
- Identifiant de clé utilisateur de groupe GUK-ID : cet identifiant est un identifiant de clé propre à un utilisateur de l'entité émettrice E et propre au groupe de communication G. Ainsi, cette clé peut être vue comme une « clé de session » dans le protocole SRTP, tel que défini dans la RFC 3711. Un identifiant de cette clé, qui n'a pas à rester secret, permet de retrouver cette clé, qui doit rester secrète. En l'absence de diversité d'extrémité, cette clé utilisateur n'est pas utilisée pour chiffrer un contenu dans le standard 3GPP MCS.
- Identifiant de clé maitre de groupe GMK-ID : cet identifiant est un identifiant de clé maitre de groupe propre au groupe de communication G. En l'absence de diversité d'extrémité, cette clé maitre de groupe GMK est utilisée seule pour chiffrer un contenu dans le standard 3GPP MCS, comme défini au point 7.5.1 de la spécification technique TS 33.180. En présence de diversité d'extrémité, cette clé maitre de groupe GMK est utilisée en combinaison avec la clé utilisateur de groupe GUK pour chiffrer un contenu comme défini au point 7.4.2 de la spécification technique TS 33.180.
- Identifiant de clé maitre MKI : cet identifiant est un identifiant de clé maître.

Chacun des trois paramètres DE, TGMK et TGUK peut être représenté sous toute forme, par exemple sous la forme d'une chaine de caractères ou d'un booléen. Ces trois paramètres se sont préférentiellement vus donner une valeur, c'est-à-dire une indication « oui » ou une indication « non », par un utilisateur et préférentiellement encore par un administrateur du réseau 3GPP MCS.

Le procédé 1 selon l'invention comprend au moins une étape 12 de sélection d'un contexte de sécurité S. Ce contexte de sécurité S est destiné à être transmis, à une étape 14 du procédé 1, dans l'en-tête d'une trame T comprenant aussi le contenu C chiffré, comme représenté à la Figure 1.

En fonction du paramètre de diversité d'extrémité DE, le contexte de sécurité S est sélectionné parmi l'un des deux groupes suivants :
- Un contexte de sécurité S avec diversité d'extrémité ou
- Un contexte de sécurité S sans diversité d'extrémité.

Dans certains cas, on peut vouloir se passer de diversité d'extrémité, ce que permet la présente invention au contraire du standard 3GPP MCS. En effet, la diversité d'extrémité n'apporte pas de sécurité supplémentaire et complexifie l'optimisation de la bande passante si l'identité de l'émetteur n'est pas facile à obtenir.

Dans le cas où un contexte de sécurité S avec diversité d'extrémité est choisi, les paramètres d'identifiant de clé utilisateur de groupe TGUK et d'identifiant de clé maitre de groupe TGMK permettent ensuite de sélectionner un contexte de sécurité S formé de :
- Un identifiant de clé maître MKI long formé de l'identifiant de clé maitre de groupe GMK-ID et de l'identifiant de clé utilisateur de groupe GUK-ID si les deux paramètres TGMK et TGUK comprennent une indication d'utiliser respectivement l'identifiant de clé maitre de groupe GMK-ID et l'identifiant de clé utilisateur de groupe GUK-ID, ou
- Un identifiant de clé maitre MKI court formé de l'identifiant de clé maitre de groupe GMK-ID si le paramètre TGMK comprend une indication d'utiliser l'identifiant de clé maitre de groupe GMK-ID et si le paramètre TGUK comprend une indication de ne pas utiliser l'identifiant de clé utilisateur de groupe GUK-ID ou

- Un identifiant de clé maitre MKI court formé de l'identifiant de clé utilisateur de groupe GUK-ID si le paramètre TGMK comprend une indication de ne pas utiliser l'identifiant de clé maitre de groupe GMK-ID et si le paramètre TGUK comprend une indication d'utiliser l'identifiant de clé utilisateur de groupe GUK-ID ou
- Aucun identifiant de clé maitre MKI si le paramètre TGMK comprend une indication de ne pas utiliser l'identifiant de clé maitre de groupe GMK-ID et si le paramètre TGUK comprend une indication de ne pas utiliser l'identifiant de clé utilisateur de groupe GUK-ID.

On entend par « MKI court » un identifiant de clé maitre MKI d'une longueur de 32 bits car il ne comprend que le GUK-ID ou le GMK-ID, et par « MKI long » un identifiant de clé maitre MKI d'une longueur de 64 bits car il comprend le GUK-ID et le GMK-ID.

Dans un contexte de sécurité S avec diversité d'extrémité et avec identifiant de clé maitre MKI long, cas représenté à la Figure 2a, la méthode de chiffrement et de déchiffrement est celle par défaut définie par le standard 3GPP MCS dans la spécification technique TS 33.180.

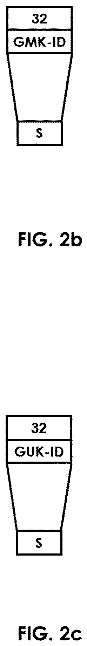

Dans un contexte de sécurité S avec diversité d'extrémité et avec identifiant de clé maitre MKI court comprenant l'identifiant de clé maitre de groupe GMK-ID, cas représenté à la Figure 2b, la méthode de chiffrement et de déchiffrement est celle définie par le standard 3GPP MCS dans la spécification technique TS 33.180 dans laquelle l'entité réceptrice R connait l'identité de l'utilisateur de l'entité émettrice E. Elle est applicable uniquement dans les cas de configuration MCX garantissant que l'identité de l'entité émetteur E sera reçue par toutes les entités réceptrices du groupe de communication et est ainsi de la responsabilité de l'administrateur de configuration lorsque c'est ce dernier qui détermine les paramètres compris dans l'information I de contexte de sécurité stockée en mémoire de l'entité émettrice E. Ces paramètres peuvent être mis à jour et modifié, par une entité à distance ou par l'entité émettrice E elle-même.

Dans un contexte de sécurité S avec diversité d'extrémité et avec identifiant de clé maitre MKI court comprenant l'identifiant de clé utilisateur de groupe GUK-ID, cas n'existant pas dans le standard 3GPP MCS et représenté à la Figure 2c, l'identifiant de clé maitre de groupe GMK-ID doit alors être déterminé par l'entité réceptrice R. Cela est réalisé grâce à une étape non représentée mise en oeuvre par l'entité réceptrice R après réception de la trame T. Dans cette étape, comprise dans un procédé d'émission de contenu selon l'invention mis en oeuvre par l'entité émettrice E et par l'entité réceptrice R et comprenant précédemment les étapes du procédé 1 selon l'invention, l'identifiant de clé maitre de groupe GMK-ID est déterminé en testant toutes les clés maitre de groupe connues de l'entité réceptrice R. En effet, le mode de chiffrement spécifié par la spécification technique TS 33.180 est AEAD-AES-128-GCM, qui vérifie l'intégrité, et il n'est donc pas possible pour l'entité réceptrice R de se tromper de clé maitre de groupe GMK déterminée car l'intégrité n'est vérifiée que pour la clé maitre de groupe GMK correcte. Toutes les clés maitre de groupe GMK associées au groupe de communication G stockées par l'entité réceptrice R ou toutes les clés maitres de groupe GMK stockées par l'entité réceptrice R peuvent être testées.

Dans un contexte de sécurité S avec diversité d'extrémité et sans identifiant de clé maitre MKI, cas n'existant pas dans le standard 3GPP MCS, le contexte de sécurité S qui sera compris dans la trame T est vide (0 bits), comme représenté à la Figure 2d. L'identifiant de clé maitre de groupe GMK-ID doit alors être déterminé par l'entité réceptrice R. Cela est réalisé grâce à une étape non représentée mise en oeuvre par l'entité réceptrice R après réception de la trame T. Dans cette étape, comprise dans un procédé d'émission de contenu selon l'invention mis en oeuvre par l'entité émettrice E et par l'entité réceptrice R et comprenant précédemment les étapes du procédé 1 selon l'invention, l'identifiant de clé maitre de groupe GMK-ID est déterminé en testant toutes les clés maitre de groupe connues de l'entité réceptrice R. En effet, le mode de chiffrement spécifié par la spécification technique TS 33.180 est AEAD-AES-128-GCM, qui vérifie l'intégrité, et il n'est donc pas possible pour l'entité réceptrice R de se tromper de clé maitre de groupe GMK déterminée. Toutes les clés maitre de groupe GMK associées au groupe de communication G stockées par l'entité réceptrice R ou toutes les clés maitres de groupe GMK stockées par l'entité réceptrice R peuvent être testées. Une fois l'identifiant de clé maitre de groupe GMK-ID déterminé, l'identifiant de clé utilisateur de groupe GUK-ID peut être déterminé sur la base de l'identité de l'utilisateur de l'entité émettrice E, comme dans l'état de la technique.

Dans un contexte de sécurité S sans diversité d'extrémité, le contexte de sécurité S peut être formé de :
- Un identifiant de clé maitre MKI court formé de l'identifiant de clé maitre de groupe GMK-ID, cas représenté à la Figure 2b, ou
- Aucun identifiant de clé maitre MKI, cas représenté à la Figure 2d.

En effet, dans un contexte de sécurité S sans diversité d'extrémité l'identifiant de clé utilisateur de groupe n'est pas utilisé pour chiffrer le contenu C.

Dans un contexte de sécurité S sans diversité d'extrémité et sans identifiant de clé maitre MKI, cas n'existant pas dans le standard 3GPP MCS, l'identifiant de clé maitre de groupe GMK-ID doit alors être déterminé par l'entité réceptrice R. Cela est réalisé grâce à une étape non représentée mise en oeuvre par l'entité réceptrice R après réception de la trame T. Dans cette étape, comprise dans un procédé d'émission de contenu selon l'invention mis en oeuvre par l'entité émettrice E et par l'entité réceptrice R et comprenant précédemment les étapes du procédé 1 selon l'invention, l'identifiant de clé maitre de groupe GMK-ID est déterminé en testant toutes les clés maitre de groupe connues de l'entité réceptrice R. En effet, le mode de chiffrement spécifié par la spécification technique TS 33.180 est AEAD-AES-128-GCM, qui vérifie l'intégrité, et il n'est donc pas possible pour l'entité réceptrice R de se tromper de clé maitre de groupe GMK déterminée. Toutes les clés maitre de groupe GMK associées au groupe de communication G stockées par l'entité réceptrice R ou toutes les clés maitres de groupe GMK stockées par l'entité réceptrice R peuvent être testées.

Le procédé 1 comprend, après l'étape 12 de sélection d'un contexte de sécurité S, une étape 13 de chiffrement du contenu C. Le chiffrement 13 du contenu C est réalisé par l'entité émettrice E en fonction du contexte de sécurité S sélectionné à l'étape 12. En effet, le contexte de sécurité S détermine si de la diversité d'extrémité doit être utilisée, auquel cas le chiffrement doit se baser sur l'identifiant de clé utilisateur de groupe GUK-ID et sur l'identifiant de clé maitre de groupe GMK-ID, ou si de la diversité d'extrémité ne doit pas être utilisée, auquel cas le chiffrement ne doit pas se baser sur l'identifiant de clé utilisateur de groupe GUK-ID et doit uniquement se baser sur l'identifiant de clé maitre de groupe GMK-ID. Le chiffrement 13 est réalisé en utilisant une clé maitre selon le protocole SRTP (Secure Real Time Protocol) à la RFC3711 et selon la spécification technique TS 33.180 point 7.5.1. La clé maitre est obtenue :
- Si le contexte de sécurité est avec diversité d'extrémité, à partir de l'identifiant de clé maitre de groupe GMK-ID et de l'identifiant de clé utilisateur de groupe GUK-ID,
- Si le contexte de sécurité est sans diversité d'extrémité, à partir de l'identifiant de clé maitre de groupe GMK-ID.

Le procédé 1 comprend une étape 14 d'émission d'une trame T selon le protocole SRTP, une telle trame T comprenant le contenu C chiffré à l'étape 13 et le contexte de sécurité S sélectionné à l'étape 12. La trame T est alors transmise à l'entité réceptrice R, qui utilise les informations comprises dans le contexte de sécurité S et les informations qu'elle a à sa disposition grâce à la topologie et au contexte du réseau pour déchiffrer le contenu C.

## Revendications

1. Procédé (1) mis en oeuvre par une entité cliente émettrice (E) comprise dans un réseau selon le standard 3GPP MCS « 3rd Generation Partnership Program Mission Critical Services », l'entité cliente émettrice (E) étant configurée pour émettre un contenu (C) destiné à une entité cliente réceptrice (R) comprise dans le réseau, l'entité cliente émettrice (E) et l'entité cliente réceptrice (R) étant affiliées à un même groupe de communication (G), le procédé (1) comprenant au moins une étape de sélection (12), par l'entité cliente émettrice (E) à partir d'au moins une information (I) de contexte de sécurité stocké en mémoire de l'entité émettrice (E), d'un contexte de sécurité (S) parmi les contextes de sécurité suivants:
- Un contexte de sécurité (S) avec diversité d'extrémité, le contexte de sécurité (S) étant formé de :
∘ Un identifiant de clé maître (MKI) long formé d'un identifiant de clé maitre de groupe (GMK-ID) et d'un identifiant de clé utilisateur de groupe (GUK-ID), l'identifiant de clé maitre de groupe (GMK-ID) étant propre au groupe de communication (G), l'identifiant de clé utilisateur de groupe (GUK-ID) étant propre à un utilisateur de l'entité émettrice (E), ou
∘ Un identifiant de clé maitre (MKI) court formé de l'identifiant de clé maitre de groupe (GMK-ID) ou
∘ Un identifiant de clé maitre (MKI) court formé de l'identifiant de clé utilisateur de groupe (GUK-ID) ou
∘ Aucun identifiant de clé maitre (MKI).
- Un contexte de sécurité (S) sans diversité d'extrémité, le contexte de sécurité (S) étant formé de :
∘ Un identifiant de clé maitre (MKI) court formé de l'identifiant de clé maitre de groupe (GMK-ID) ou
∘ Aucun identifiant de clé maitre (MKI).

2. Procédé (1) selon la revendication précédente comprenant en outre les étapes de :
- Chiffrement (13) du contenu (C), le contenu (C) étant chiffré par l'entité cliente émettrice (E), le chiffrement (13) du contenu (C) étant basé sur une clé maitre selon le protocole SRTP (Secure Real Time Protocol), la clé maitre étant obtenue :
∘ Si le contexte de sécurité (S) est avec diversité d'extrémité, à partir de l'identifiant de clé maitre de groupe (GMK-ID) et de l'identifiant de clé utilisateur de groupe (GUK-ID),
∘ Si le contexte de sécurité (S) est sans diversité d'extrémité, à partir de l'identifiant de clé maitre de groupe (GMK-ID),
- Emission (14) d'une trame (T) à destination de l'entité réceptrice, selon le protocole SRTP, la trame (T) comprenant le contenu (C) chiffré et le contexte de sécurité (S).

3. Procédé (1) selon l'une quelconque des revendications précédentes selon lequel l'information (I) stockée en mémoire de l'entité émettrice (E) est un ensemble de paramètres comprenant les paramètres suivants :
- Paramètre (DE) de diversité d'extrémité comprenant une information de mise en oeuvre de diversité d'extrémité ou non,
- Paramètre (TGMK) de transmission de l'identifiant de clé maitre de groupe (GMK-ID) comprenant une information de transmission de l'identifiant de clé maitre de groupe (GMK-ID) ou non,
- Paramètre (TGUK) de transmission de l'identifiant de clé utilisateur de groupe (GUK-ID) comprenant une information de transmission de l'identifiant de clé utilisateur de groupe (GUK-ID) ou non,
et en ce que le contexte de sécurité (S) est construit à partir de l'ensemble de paramètres.

4. Procédé (1) selon l'une quelconque des revendications précédentes selon lequel le groupe de communication (G) est un groupe MCPTT, MCVideo ou MCData.

5. Procédé (1) selon l'une quelconque des revendications précédentes selon lequel l'information (I) de contexte de sécurité est reçue (11) d'une entité distante précédemment à l'étape (12) de sélection de contexte de sécurité (S).

6. Procédé (1) selon l'une quelconque des revendications précédentes selon lequel :
- l'identifiant de clé maitre de groupe (GMK-ID) peut être obtenu à partir de l'identifiant de clé utilisateur de groupe (GUK-ID) et d'une identité de l'utilisateur de l'entité émettrice (E) et
- l'identifiant de clé utilisateur de groupe (GUK-ID) peut être obtenu à partir de l'identifiant de clé maitre de groupe (GMK-ID) et d'une identité de l'utilisateur de l'entité émettrice (E).

7. Réseau de communication selon le standard 3GPP MCS « 3rd Generation Partnership Program Mission-Critical System », le réseau de communication comprenant au moins :
- une entité cliente émettrice (E) configurée pour mettre en oeuvre le procédé (1) selon l'une quelconque des revendications 1 à 7,
- une entité cliente réceptrice (R) configurée pour recevoir le contenu (C) chiffré et le contexte de sécurité (S) émis par l'entité émettrice (E).
